# EUROPEAN PATENT SPECIFICATION

(11) **EP 1 438 121 B1**
(45) Date of publication and mention of the grant of the patent: **31.08.2005**
(21) Application number: 02772560.5
(22) Date of filing: 24.10.2002
(51) Int. Cl.: B01D 53/94, F01N 3/20

(54) **PHOTOCATALYTIC REACTOR, EXHAUST GAS SYSTEM FOR A VEHICLE AND METHOD FOR PHOTOCATALYTICALLY REDUCING NOX**
PHOTOKATALYTISCHER REAKTOR, ABGASREINIGUNGSSYSTEM FÜR EIN FAHRZEUG UND VERFAHREN ZUR PHOTOKATALYTISCHEN VERMINDERUNG VON NOX
REACTEUR PHOTOCATALYTIQUE, SYSTEME DE TRAITEMENT DE GAZ POUR UN VEHICULE ET PROCEDE DE REDUCTION PHOTOCATALYTIQUE DE NOX

(30) Priority: 26.10.2001 GB 0125725
(43) Date of publication of application: 21.07.2004
(73) Proprietor: JOHNSON MATTHEY PUBLIC LIMITED COMPANY, London SW1Y 5BQ (GB)
(72) Inventor: TWIGG, Martyn Vincent, Cambridge CB3 8PQ (GB)
(74) Representative: Nunn, Andrew Dominic
(86) International application number: PCT/GB2002/004843
(87) International publication number: WO 2003/035227

(56) References cited:
- EP-A- 0 993 859
- WO-A-01/70396
- WO-A-98/07931
- US-A- 5 516 492
- PATENT ABSTRACTS OF JAPAN vol. 1999, no. 02, 26 February 1999 (1999-02-26) -& JP 10 309438 A (MITSUBISHI MOTORS CORP), 24 November 1998 (1998-11-24)

## Description

This invention relates to a photocatalytic reactor and in particular to a photocatalytic reactor for treating exhaust gases from internal combustion engines.

The use of semiconductor photocatalysis has been suggested as a means of destroying pollutants in water and air (see, for example, "Environmental Applications of Semiconductor Photocatalysis", M.R. Hoffmann *et al*., Chem. Rev., 95 (1995) 69-96). There are a limited number of publications describing the application of semiconductor photocatalysis to treat exhaust gases from internal combustion engines: specifically to catalyse the oxidation of hydrocarbons (HC) and/or carbon monoxide (CO) to water and/or carbon dioxide (CO₂) by reaction with nitrogen oxides (NOx) and/or oxygen (O₂), which NOx is consequently reduced to N₂ by the reaction.

In one such publication, we describe the UV-induced photo-oxidation of propene, propane, ethene, ethane, *n*-butane and *n*-hexane over a TiO₂ photo-catalyst disposed in a laboratory scale reactor at 150°C with hydrocarbon concentrations up to 4000 ppm and O₂ concentrations up to 20%. ("Photo-oxidation of short-chain hydrocarbons over titania", C.T. Brigden *et al*., App. Cat. B, 32 (2001) 63-71). Also, in WO 97/48476 Volkswagen describe an exhaust system for an internal combustion engine including a conventional honeycomb monolith coated with TiO₂, a UV light source at either end of the monolith and reflectors to transmit the emitted light directly or indirectly into the channels of the monolith.

A problem with the arrangement in WO 97/48476 is that it is difficult to transmit the light more than a short distance into the monolith unless the incident light is carefully arranged to be precisely parallel with the channels. Another problem is that we have found that for efficient NOx removal, it is advantageous to have a large number of short, parallel reaction paths, rather than the long aspect ratio provided by a conventional monolithic structure.

In WO 01/08787 and WO 01/37977 Volkswagen have sought to remove the problem of transmitting the UV light along the monolith channels by inserting light guides into the channels. However, this arrangement is complicated, we believe that the light guides are insufficiently robust for use in an exhaust system and they can undesirably increase the backpressure in the system. Furthermore, the arrangement described does not meet the problem of sub-optimal NOx conversion.

A photocatalytic reactor without a conventional monolith substrate is described in US-A-5,778,664. In one embodiment, the reactor comprises a chamber for receiving a flowing exhaust gas which chamber having a gas inlet, a gas outlet, one or more light sources and a packing material. The chamber is lined with a coating of TiO_{2.} The packing material comprises a substrate, such as quartz capillary tubes, which substrate is also coated with TiO₂.

It is not clear how "packed" the inventors intend the "packing material" to be. Too much packing material could cause back pressure problems in the system and prevent optimal illumination of the supported photocatalyst by the light source. Furthermore, it would appear from the Figures that the packing material has a relatively long aspect ratio and so would not meet the problem of sub-optimal NOx conversion.

EP-A-0 993 859 discloses a photocatalytic reactor comprising a chamber with gas inlet and outlet, a source of electromagnetic radiation and a substrate for supporting a catalyst which is disposed in the chamber.

We have now devised an improved photocatalytic reactor including a substrate monolith having a relatively short aspect ratio that meets or reduces problems associated with prior art arrangements.

According to one aspect, the invention provides a photocatalytic reactor for treating exhaust gases from a power plant such as an internal combustion engine, which reactor comprising a chamber for receiving a flowing exhaust gas, a first inlet and a first outlet, at least one source of electromagnetic radiation and at least one monolith and a photocatalyst disposed in the chamber, characterised in that the monolith comprises at least one walled body defining a passage, which at least one walled body comprising at least one second inlet and at least one second outlet, wherein the sum of the cross-sectional areas of the or each second outlet being greater than the sum of the cross sectional areas of the or each second inlet whereby the linear flow velocity of a gas at a point downstream of the at least one second outlet is less than the linear flow velocity of the gas entering the at least one second inlet.

The catalyst monolith is disclosed in WO 03/035254, the entire contents of which are incorporated herein by reference.

An advantage of the present invention is that, in addition to photocatalytic reduction of NOₓ, we have found that it is possible to photocatalytically oxidise low levels of hydrocarbons in an exhaust gas.

In one illustrative embodiment, the cross sectional area of the or each passage is greater towards a downstream end relative to an upstream end.

In a further illustrative embodiment, the substrate comprises two or more passages wherein at least one passage has an inlet and all passages have at least one outlet.

For ease of construction, in one illustrative embodiment, the wall of the substrate comprises a tube, although it will be appreciated that the tube need not be straight in the longitudinal direction nor does the cross-section of the tube necessarily have to be circular. Indeed, a tube having at least one flat side, such as a hexagonal cross-section, can improve the rigidity of the tube. However, a circular cross-section is used for convenience. For example, the tube can be frustoconical in shape.

According to another illustrative embodiment, the passage comprises at least one baffle, which can be a narrowing or constriction of the passage, such as a venturi tube, or a dead-end in the passage.

In a further illustrative embodiment the substrate is arranged such that the or each second outlet is positioned so that a gas can exit the at least one passage in a direction other than that in which it enters the at least one passage.

The photocatalyst can be supported on the internal surface of the chamber and/or the internal surface of the substrate wall and/or the source of electromagnetic radiation. However, in one illustrative embodiment the reactor comprises means for supporting the photocatalyst in the flow path of exhaust gas exiting the at least one opening in the substrate. Of course, this support means can be the internal surface of the chamber, but in alternative embodiments it can include an internal surface of a sleeve disposed around the substrate wall.

In another illustrative embodiment, in order to increase the effective surface area of the support means, it comprises at least one substantially lateral projection extending into the space around an exterior surface of the substrate wall. Of course, the at least one projection can be supported by the exterior of the substrate wall and/or by the internal wall of the chamber or the internal wall of the sleeve.

In a particularly preferred embodiment, the support means comprises at least one fin, which can extend in a helix in the longitudinal direction relative to the passage.

In aspect, the lateral projection can extend more in the longitudinal direction relative to the passage, or in a more lateral direction relative to the passage, i.e. across it. When the lateral projection is a single fin it can extend in a helix in the longitudinal direction relative to the passage. We presently prefer that the lateral projection is a single fin supported by the wall and that the aspect of the helix is predominantly lateral, i.e. the incline on the helix is relatively small.

The skilled person will appreciate that other shaped lateral projections can be used, for example the lateral projections can be a plurality of individual discs supported by the wall or the sleeve, or the or each lateral projection can be oval, square or triangular in shape. Equally, the at least one lateral projection can be angled relative to the surface of the wall or sleeve, i.e. the lateral projection can, for example, subtend an acute angle relative to the upstream, i.e. relative to the direction of exhaust gas flow, surface of the wall or sleeve.

The substrate, i.e. the walled body forming the passage, and/or where present the support means, e.g. the sleeve and/or the at least one lateral projection, is preferably formed from a metal, such as a stainless steel (because it does not degrade in the presence of UV light) or a ferritic iron-chromium-aluminium alloy. However, it is possible for one or more parts of the substrate to be made from non-metallic materials such as ceramic. For example, the sleeve can be of ceramic, glass, quartz or a polymer. The or each lateral projection can be fixed to the external wall of the passage or to the sleeve surface by standard engineering methods, such as welding.

The phenomenon of photocatalysis is known to the skilled person and a detailed explanation can be found in the prior art, for example the Hoffmann *et al*. paper above. Briefly, a photocatalyst is activated by electromagnetic radiation of a suitable energy level and is believed to form what is known as a separated electron/hole pair. The separated electron/hole pair can catalyse the desired oxidation/reduction between hydrocarbons, carbon monoxide, nitrogen oxides and oxygen. The photon energy required for the formation of such electron/hole pairs is dependent upon the material.

The nature of the photocatalyst for use in the present invention is not important. It can include TiO₂, SnO₂, CdS, CdSe, ZnS, In₂S₃, In₂Se₃, SrTiO₃, alpha-Fe₂O₃, SiO₂/Al₂O₃, ZnO, CdTe, CuInSe₂, CuS, FeS₂, CuFeS₂, Si, GaAS, GaSb, GaPS, GaInP, As₂S₃, AlP, AlAg, GaP, AlSb, InP, InAS, InSb, MoS₂, WTe₂, Cr₂Te₃, MoTe, Cu₂S, WS₂, Bi₂O₃, CuO, Cu₂O, MoO₃, InO₃, Ag₂O, PbO, SrTiO₃, BaTiO₃, Co₃O₄, Fe₂O₃, NiO, natural or synthetic pyrites, natural or synthetic chalcopyrites or mixtures of any two or more thereof. Optionally doped TiO₂ is presently preferred, with the anatase form of TiO₂ most preferred.

The photocatalyst material can be doped with one or more transition metals such a Cr(III), Fe(III), V(IV), Ti(III), Sb(V), Ga(III)or Ag(I) or a mixture of any two or more thereof. Furthermore, the photocatalyst composition can include dispersed precious metals such as Pt, Pd, Rh, Ag, Au or mixtures of any two or more thereof. Conveniently, the precious metals can be deposited on the photocatalyst material by photocatalytic reduction of an aqueous suspension of a precious metal salt. For example, where the desired precious metal is platinum, the solution contains chloroplatinic acid, sodium chloroplatinate, hexahydroxyplatinic acid or platinum dinitrodiammine. Alternatively, impregnation, sputtering or kneading methods can be used.

Methods of applying the photocatalyst to support surfaces of the substrate and the internal wall of the chamber are known to the skilled person and include a sol-gel process, chemical vapour deposition, sintering, evaporation or sputtering.

The source of the electromagnetic radiation can be chosen to complement the photon energy required for the formation of electron/hole pairs in the photocatalyst material. The light source itself can be inside or outside the chamber. Where outside, the light can be directed into the interior of the chamber by a wave-guide, such as an optical fibre, optionally coated with photocatalyst. Alternatively, the chamber wall, in whole or in part e.g. as a window, can be transparent to the electromagnetic radiation and the radiation is directed into the chamber through the transparent chamber wall. Preferred materials for transparent windows to the chamber wall include glass, quartz or polymers.

Preferred electromagnetic radiation sources for use in combination with a TiO₂ photocatalyst include an UV lamp that emits electromagnetic radiation at e.g. wavelengths of 215nm, 254nm or 650nm. Low-pressure mercury arc lamps can be used which provide strong emission lines at 185nm and 254nm. High-pressure short arc mercury-xenon lamps will provide a continuous UV spectrum between 190 and 300nm. A hydrogen discharge lamp, a Lyman discharge, and a xenon discharge lamp may also be used.

Preferably, the radiation source containing the gas or filament includes glass, e.g. soda lime glass or borosilicate glass, in order to transmit the radiation. However, quartz is typically used because it is found that it transmits photon energy of the required level to promote electron/hole pair formation in a TiO₂ photocatalyst.

The electromagnetic radiation source need not be monochromatic. For example, a source emitting broad band electromagnetic radiation in the visible spectrum can be used such as a halogen lamp, or a lamp including a noble gas. Some photocatalysts are even activated by infra red light.

According to another aspect, the invention provides an exhaust system for a vehicle powered by a power plant such as an internal combustion engine including a reactor according to the invention. The power plant can be a stationary power source, for example, but will typically be an internal combustion engine such as a diesel engine or a gasoline engine. If a gasoline engine, the engine can be a lean-burn gasoline engine, such as a gasoline diesel injection engine, or a stoichiometrically-operated engine. Alternatively, the engine can be powered by alternative fuels such as natural gas, liquid petroleum gas, ethanol etc. or it may be a hybrid and run at different times on a conventional fuel, such as diesel, and an alternative fuel.

According to an illustrative embodiment, the exhaust system is for a diesel engine, and it includes a catalyst for oxidising NO to NO₂ and a downstream particulate filter for trapping particulate matter, wherein the particulate matter combusts in NO₂ in the exhaust gas at up to 400°C and the reactor according to the invention is disposed downstream of the particulate filter. The arrangement of an upstream oxidation catalyst for oxidising NO to NO₂ and a downstream particulate filter is the subject of Johnson Matthey's EP-B-341832 and US-A-4,902,487.

Alternatively, the photocatalytic reactor can replace the three-way catalyst 30 in the system described in our WO 00/21647.

However, the exhaust system can also include, usually upstream of the reactor, one or more of a three-way catalyst (for gasoline applications), a NOx trap (for diesel or lean-burn gasoline engines), and for lean-burn, such as diesel or lean-burn gasoline applications, an ammonia selective catalytic reduction catalyst (wherein the exhaust system further includes means for introducing ammonia or a precursor such as urea or hydrazine upstream of the SCR catalyst) or a lean-NOx catalyst. A diesel oxidation catalyst can be used in diesel systems.

In illustrative embodiments, an exhaust system for a lean-burn gasoline engine includes a three-way catalyst in the so-called close-coupled position near the exhaust manifold, a NOx trap in the underfloor position and a downstream photocatalytic reactor.

The exhaust system can include an electronic control unit (ECU) including a microprocessor, which can be part of and/or actuated by, an engine management unit. The ECU is for controlling the electromagnetic radiation source to operate intermittently e.g. during engine operating conditions (speed, load etc.) that have been pre-determined to generate more hydrocarbon, CO and/or NOx. Alternatively, the electromagnetic radiation source may operate during all operational conditions of the engine, which system has the benefit of simplicity, but this is less fuel-efficient. Of course, the intensity of the light source can be adjusted so that the intensity is relatively high when high rates of photocatalytic activity are required e.g. high speed cruising, and relatively low at other times, e.g. during engine idling.

The exhaust system can also include an on-board diagnostics function in which sensors for one or more exhaust gas components are included to test e.g. the tail-pipe exhaust gas composition, or other position within the exhaust system downstream of the photocatalytic reactor, for levels of NOx, particulate matter, hydrocarbon and/or carbon monoxide. The ECU can be programmed to actuate the electromagnetic radiation source when the sensor signals that the level of one or more tail-pipe exhaust gas components e.g. NO₂ is above a predetermined level. Sensors can also be used to sense the temperature of particular catalyst components within the exhaust system.

According to a further aspect, the invention provides a method of photocatalytically reducing NOₓ in a flowing gas, which method comprising reducing, in any dimension, the linear flow rate of the gas by passing the exhaust gas through a monolith, the monolith comprising at least one walled body defining a passage, which at least one walled body comprising at least one second inlet and at least one second outlet, wherein the sum of the cross-sectional areas of the or each second outlet being greater than the sum of the cross sectional areas of the or each inlet, contacting a photocatalyst with electromagnetic radiation and contacting the gas exiting the at least one second outlet with the photocatalyst.

According to a further aspect, the invention provides the use of a reactor according to the invention for photocatalytically catalysing the oxidation of hydrocarbon and/or carbon monoxide using NOx and/or oxygen (O₂) in an exhaust gas of a power plant such as an internal combustion engine, which NOx is consequently reduced by the reaction.

In order that the invention may be more fully understood, an illustrative embodiment thereof will now be described with reference to the accompanying drawings, in which:
Figure 1 is a sectional schematic view of a photocatalyst catalyst substrate according to the present invention;
Figure 2 is a sectional schematic view of a photocatalytic reactor including two substrates of Figure 1;
Figure 3 is a graph showing photocatalytic conversion of hydrocarbon as a function of oxygen concentration; and
Figure 4 is a graph showing photocatalytic conversion of hydrocarbon and nitrogen oxides.

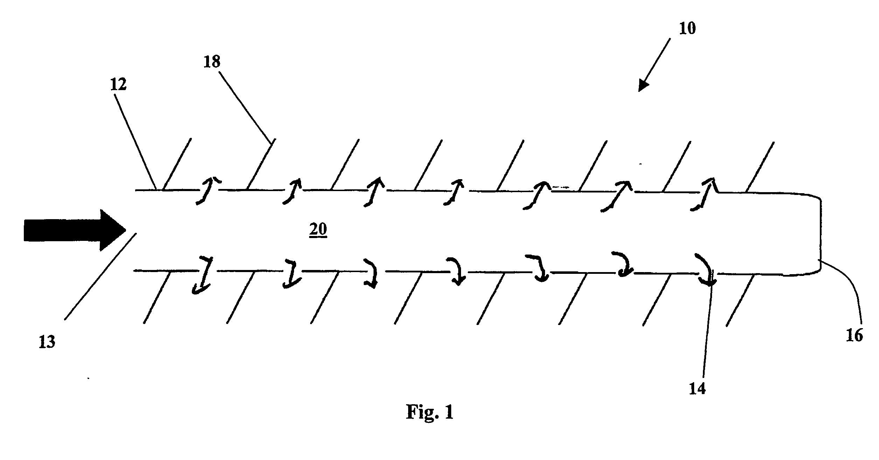

In Figure 1, catalyst substrate 10 comprises a tube 12 of circular cross-section including a second inlet 13 and a plurality of second outlets 14. Tube 12 is made from punched stainless steel plate and is welded into a tubular shape. At one end of the tube 12 is baffle 16 in the form of a closure formed from the stainless steel material. A fin 18, also of stainless steel, is affixed to the exterior surface of the tube 12 by welding. The fin 18 can be one of a plurality of discs welded to the exterior surface of the tube 12, but in the embodiment represented in the Figure, the fin 18 is a continuous strip of stainless steel welded to the exterior surface of the tube 12 in a helix.

A photocatalyst comprising the anatase form of TiO₂ is applied by a sol-gel process to the fin 18 of the substrate.

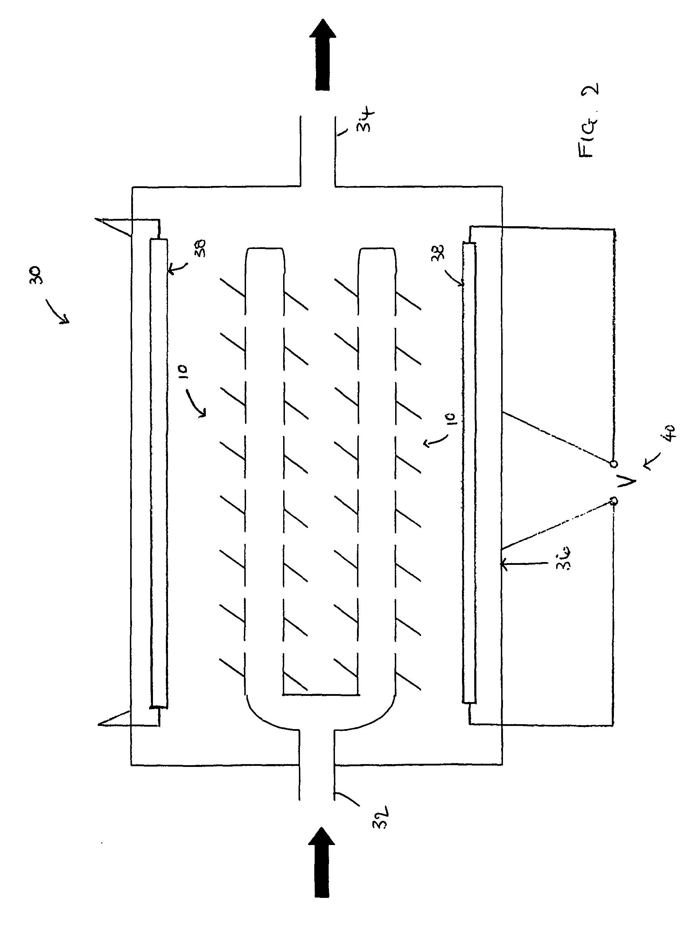

Figure 2 shows a sectional schematic view of a photocatalytic reactor 30 comprising a stainless steel chamber 36. Two catalyst substrates 10 as shown and described in connection with Figure 1 are disposed in the interior of the chamber 36 and are connected in parallel to an exhaust gas first inlet 32. The chamber further includes an exhaust gas first outlet 34. The internal surface of the chamber 36 supports a photocatalyst comprising the anatase form of TiO₂ applied by a sol-gel process. Quartz mercury lamps for emitting UV light 38 are disposed inside the chamber 36, each connected to a voltage source 40 which is controlled by an electronic control unit (not shown).

In an alternative embodiment, the or each electromagnetic radiation source is positioned outside the chamber and the electromagnetic radiation is directed inside the chamber by suitable means such as a wave guide e.g. optical fibre. The wave-guide can also be coated with photocatalyst.

The skilled person will appreciate that the arrangement of electromagnetic radiation source shown in Figure 2 is but one way of arranging the substrate monoliths and radiation sources. We presently use a similar number of electromagnetic radiation sources disposed inside the chamber 36. Thus, in an illustrative embodiment, three UV lamps are used, the lamps and three substrates being arranged alternately and hexagonally when viewed in cross section.

Alternatively, a central lamp can be used in the centre of, for example, three substrates arranged in a triangle when viewed in cross-section.

In practice, the photocatalytic reactor 30 is disposed in an exhaust passage of an exhaust system of an internal combustion engine, e.g. a diesel engine exhaust system, such that flowing exhaust gas (represented by the large, bold arrow) enters the chamber via first inlet 32 and is then received in the passage 20 of the substrate through second inlet 13. The flowing exhaust gas is prevented from exiting the tube 12 at the other end thereof by baffle 16, and so the exhaust gas (represented by the small arrows in Figure 1) exits the tube 12 via the plurality of second outlets 14. The linear velocity of the gas at a point downstream of the at least one second outlet is reduced relative to the linear velocity of the exhaust gas entering the passage 20. This has the advantage that reactions catalysed by a catalyst supported on the or each fin 18 that occur at an increased rate at lower linear flow velocities than at higher linear flow velocities are promoted.
The exhaust gas contacts the supported photocatalyst which has been excited by electromagnetic radiation from sources 38, thereby promoting redox reactions between exhaust gas components.

The following Example is provided by way of illustration only.

Five reactors as shown in Fig 1 were used for the experiment. Each reactor was 380mm length, with a central tube diameter of 38mm and fin diameter of 45mm. The individual fins were separated by 5mm. The reactors were fitted equidistant around the circumference of a chamber as illustrated in Fig 2. A suitable tubular electromagnetic radiation bulb was mounted centrally in the chamber, parallel to the reactors. The chamber diameter was 144mm and cones (not shown) were bolted to either end to enable connection to a gas source, and prevent light escaping to atmosphere.

The chamber was connected to a synthetic gas supply enabling single gases or mixtures of hydrocarbon (HC), nitrogen oxides (NOx as NO) and oxygen (O₂) in a nitrogen (N₂) carrier to be passed through the reactor. From the concentration of gases leaving the reactor the conversion efficiency of the photo catalyst was measured. All tests were conducted at room temperature with the ultra violet light source on.

### Experiment 1

In a first run, propane gas (at a concentration of 1500 ppm C1) in N₂ was passed over the catalyst and conversion efficiency as a function of oxygen concentration in the gas stream, was measured. In a second run the propane of the first run was exchanged with the same concentration of propene and the test was repeated. In a third run, the propene in N₂ was exchanged for the same concentration of methane in N₂. The space velocity for these tests was 580h⁻¹.

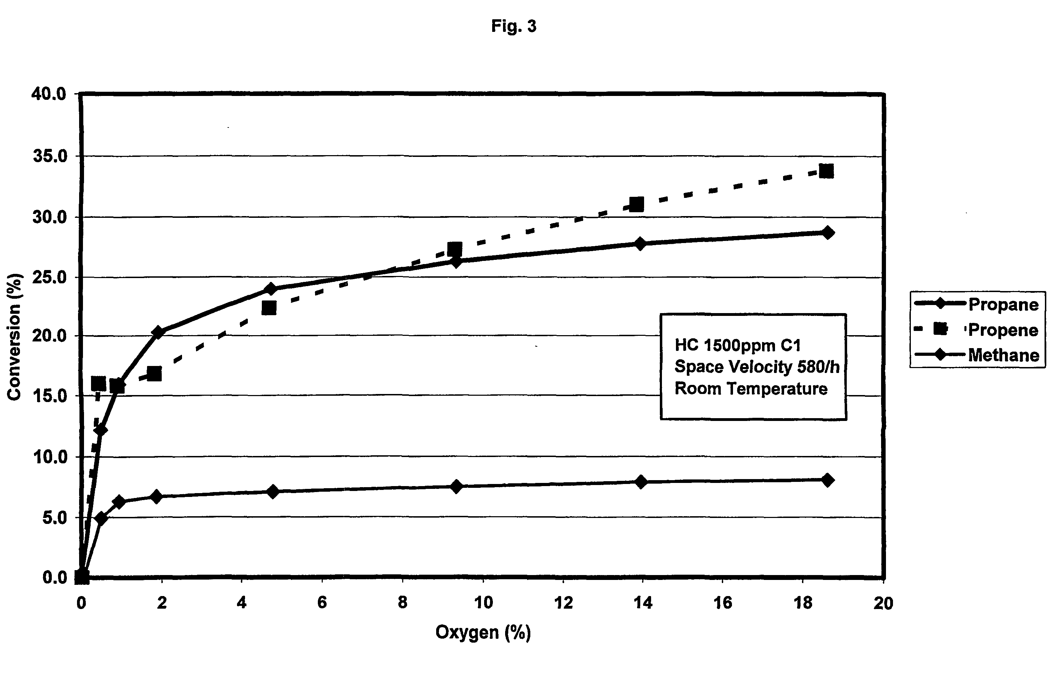

Figure 3 summarises the results. The results show propane and propene conversion increases with O₂ concentration to a maximum of 35% for propene at 18% O₂. Methane, which is a difficult gas to oxidise, achieved 7% conversion at room temperature but was fairly independent of oxygen concentration.

### Experiment 2

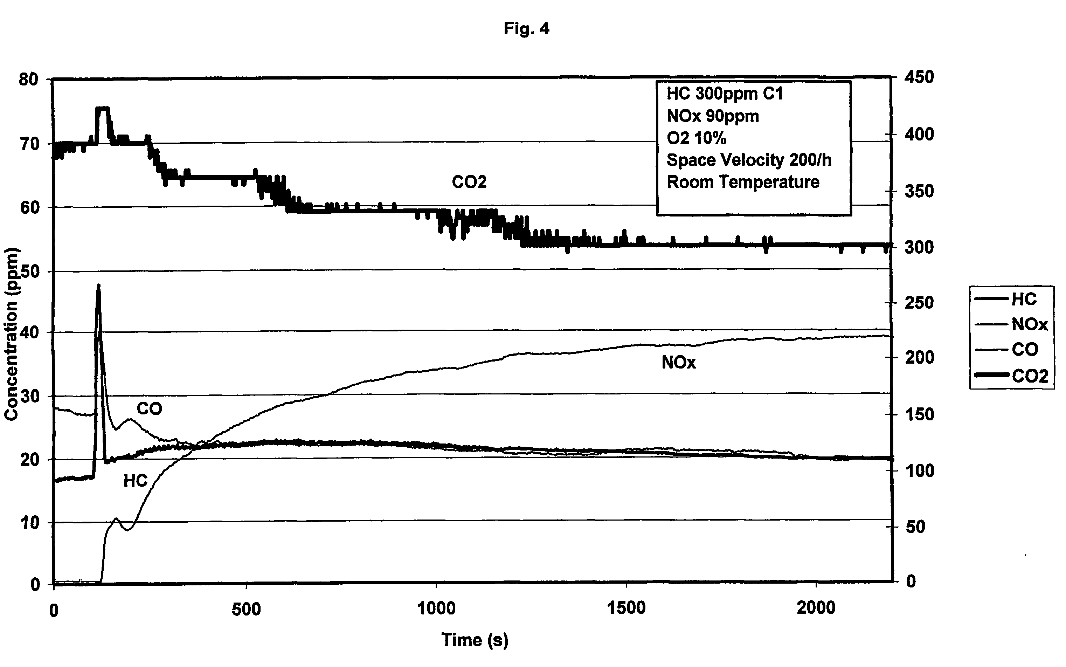

A gas mix containing 100ppm propane, 90 ppm NOx and 10% O₂ was passed at room temperature and a space velocity of 200h⁻¹ over the reactor. Figure 4 shows NOx conversion close to 60% and HC conversion of 80%, with CO and CO₂ as products of combustion.

## Claims

1. A photocatalytic reactor (30) for treating exhaust gases from a power plant such as an internal combustion engine, which reactor comprising a chamber (36) for receiving a flowing exhaust gas, a first inlet (32) and a first outlet (34), at least one source of electromagnetic radiation (38), at least one monolith (10) disposed in the chamber and a photocatalyst **characterised in that** the monolith (10) comprises at least one walled body defining a passage (20), which at least one walled body comprising at least one second inlet (13) and at least one second outlet (14), wherein the sum of the cross-sectional areas of the or each second outlet (14) being greater than the sum of the cross sectional areas of the or each second inlet (13) whereby the linear flow velocity of a gas at a point downstream of the at least one second outlet (14) is less than the linear flow velocity of the gas entering the at least one second inlet (13).

2. A reactor according to claim 1, wherein the or each passage comprises a tube.

3. A reactor according to claim 1 or 2, wherein the passage comprises at least one baffle, which at least one baffle forms a dead-end in the passage.

4. A reactor according to claim 1, 2 or 3, wherein the arrangement is such that the or each second outlet is positioned so that a gas can exit the at least one passage in a direction other than that in which it enters the at least one passage.

5. A reactor according to claim 1, 2, 3 or 4, wherein at least one of an internal surface of the chamber (36), an internal surface of a substrate wall (12) and a support means (18) in the flow path of exhaust gas exiting the at least one second outlet (14) supports a photocatalyst.

6. A reactor according to claim 5, wherein the support means comprises at least one substantially lateral projection extending into a space on the exterior of the substrate wall (12) relative to the passage, which at least one projection is supported by the substrate wall (12).

7. A reactor according to claim 6, wherein the support means comprises at least one fin, which at least one fin extends in a helix in the longitudinal direction relative to the passage (20).

8. A reactor according to any preceding claim, wherein the catalyst substrate (10) is made, at least in part, from a metal, preferably stainless steel.

9. A reactor according to any preceding claim, wherein the photocatalyst comprises TiO₂, SnO₂, CdS, CdSe, ZnS, In₂S₃, In₂Se₃, SrTiO₃, alpha-Fe₂O₃, SiO₂/Al₂O₃, ZnO, CdTe, CuInSe₂, CuS, FeS₂, CuFeS₂, Si, GaAS, GaSb, GaPS, GaInP, As₂S₃, AlP, AlAg, GaP, AlSb, InP, InAS, InSb, MoS₂, WTe₂, Cr₂Te₃, MoTe, Cu₂S, WS₂, Bi₂O₃, CuO, Cu₂O, MoO₃, InO₃, Ag₂O, PbO, SrTiO₃, BaTiO₃, Co₃O₄, Fe₂O₃, NiO, natural or synthetic pyrites, natural or synthetic chalcopyrites or mixtures of any two or more thereof, preferably the anatase form of TiO₂, optionally further comprising one or more precious metal dispersed thereon, preferably selected from the group consisting of Pt, Pd, Rh, Ag, Au or a mixture of any two or more thereof; and one or more transition metal dopant, preferably selected from the group consisting of Cr(III), Fe(III), V(IV), Ti(III), Sb(V), Ga(III) and Ag(I) or a mixture of any two or more thereof.

10. A reactor according to any preceding claim, wherein the or each source (38) of the electromagnetic radiation emits UV, broad band visible or infrared electromagnetic radiation, and wherein the or each electromagnetic radiation source (38) is disposed inside the chamber (36).

11. An exhaust system for a vehicle powered by a power plant such as an internal combustion engine, which exhaust system including a reactor (30) according to any preceding claim.

12. An exhaust system for a diesel engine according to claim 11, which exhaust system including a catalyst for oxidising NO to NO₂, a downstream particulate filter for trapping particulate matter, wherein the particulate matter combusts in NO₂ in the exhaust gas at up to 400°C and the reactor (30) is disposed downstream of the particulate filter.

13. An exhaust system according to claim 11 or 12 further comprising an electronic control unit for controlling the function of the exhaust system.

14. A method of photocatalytically reducing NOₓ in a flowing gas, which method comprising reducing, in any dimension, the linear flow rate of the gas by passing the exhaust gas through a monolith (10), the monolith comprising at least one walled body defining a passage (20), which at least one walled body comprising at least one second inlet (13) and at least one second outlet (14), wherein the sum of the cross-sectional areas of the or each second outlet (14) being greater than the sum of the cross sectional areas of the or each inlet (13), contacting a photocatalyst with electromagnetic radiation and contacting the gas exiting the at least one second outlet with the photocatalyst.

15. The use of a reactor (30) according to any of claims 1 to 10 for photocatalytically catalysing the oxidation of hydrocarbon and/or carbon monoxide using NOx and/or oxygen (O₂) in an exhaust gas of a power plant such as an internal combustion engine, which NOx is consequently reduced by the reaction.

## Patentansprüche

1. Photokatalytischer Reaktor (30) zur Behandlung von Abgasen aus einem Antriebssystem, wie einem Verbrennungsmotor, wobei der Reaktor umfasst eine Kammer (36) zur Aufnahme eines strömenden Abgases, einen ersten Einlass (32) und einen ersten Auslass (34), mindestens eine Quelle elektromagnetischer Strahlung (38), mindestens einen Monolith (10), der in der Kammer angeordnet ist, und einen Photokatalysator, **dadurch gekennzeichnet, dass** der Monolith (10) mindestens einen eine Wand aufweisenden Körper umfasst, der einen Durchlass (20) definiert, wobei der mindestens eine eine Wand aufweisende Körper mindestens einen zweiten Einlass (13) und mindestens einen zweiten Auslass (14) umfasst, wobei die Summe der Querschnittsflächen von dem oder jedem zweiten Auslass (14) größer ist als die Summe der Querschnittsflächen von dem oder jedem zweiten Einlass (13), wobei die lineare Strömungsgeschwindigkeit von einem Gas an einem Punkt stromabwärts von dem mindestens einen zweiten Auslass (14) geringer ist als die lineare Strömungsgeschwindigkeit von dem Gas, das in den mindestens einen zweiten Einlass (13) eintritt.

2. Reaktor gemäß Anspruch 1, wobei der oder jeder Durchlass ein Rohr umfasst.

3. Reaktor gemäß Anspruch 1 oder 2, wobei der Durchlass mindestens eine Drossel oder Prallfläche umfasst, wobei die mindestens eine Drossel oder Prallfläche ein totes Ende in dem Durchlass bildet.

4. Reaktor nach Anspruch 1, 2 oder 3, wobei die Anordnung so ist, dass der oder jeder zweite Auslass angeordnet ist, so dass ein Gas den mindestens einen Durchlass verlassen kann in einer Richtung, die anders ist als die, in der es in den mindestens einen Durchlass eintritt.

5. Reaktor gemäß Anspruch 1, 2, 3 oder 4, wobei mindestens eine oder eines von einer Innenfläche der Kammer (36), einer Innenfläche von einer Substratwand (12) und einem Trägermittel (18) in dem Strömungsweg des Abgases, das den mindestens einen zweiten Auslass (14) verlässt, einen Photokatalysator trägt.

6. Reaktor nach Anspruch 5, wobei das Trägermittel mindestens einen im wesentlichen seitlichen Vorsprung umfasst, der sich in einen Raum erstreckt an der Außenseite der Substratwand (12) bezogen auf den Durchlass, wobei der mindestens eine Vorsprung durch die Substratwand (12) getragen wird.

7. Reaktor gemäß Anspruch 6, wobei das Trägermittel mindestens einen Grat oder eine Rippe umfasst, wobei sich der mindestens eine Grat oder die mindestens eine Rippe in einer Schraubenlinie in der Longitudinalrichtung bezogen auf den Durchlass (20) erstreckt.

8. Reaktor nach einem beliebigen vorstehenden Anspruch, wobei das Katalysatorsubstrat (10), mindestens zum Teil, aus einem Metall, vorzugsweise einem nicht rostenden Stahl, ist.

9. Reaktor nach einem beliebigen vorstehenden Anspruch, wobei der Photokatalysator umfasst TiO₂, SnO₂, CdS, CdSe, ZnS, In₂S₃, In₂Se₃, SrTiO₃, alpha-Fe₂O₃, SiO₂/Al₂O₃, ZnO, CdTe, CuInSe₂, CuS, FeS₂, CuFeS₂, Si, GaAS, GaSb, GaPS, GaInP, As₂S₃, AlP, AlAg, GaP, AlSb, InP, InAs, InSb, MoS₂, WTe₂, Cr₂Te₃, MoTe, Cu₂S, WS₂, Bi₂O₃, CuO, Cu₂O, MoO₃, InO₃, Ag₂O, PbO, SrTiO₃, BaTiO₃, Co₃O₄, Fe₂O₃, NiO, natürliche oder synthetische Pyrite, natürliche oder synthetische Chalkopyrite, oder Gemische von beliebigen zwei oder mehr davon, vorzugsweise die Anatasform von TiO₂, und gegebenenfalls ferner umfasst ein oder mehr Edelmetall(e), das oder die darauf verteilt sind, vorzugsweise ausgewählt aus der Gruppe, bestehend aus Pt, Pd, Rh, Ag, Au oder einem Gemisch von beliebigen zwei oder mehr davon; und einen oder mehr Übergangsmetalldotierstoff(e), vorzugsweise ausgewählt aus der Gruppe, bestehend aus Cr(III), Fe(III), V(IV), Ti(III), Sb(V), Ga(III) und Ag(I) oder ein Gemisch von beliebigen zwei oder mehr davon.

10. Reaktor nach einem beliebigen vorstehenden Anspruch, wobei die oder jede Quelle (38) der elektromagnetischen Strahlung elektromagnetische UV-, sichtbare Breitband- oder Infrarotstrahlung ausstrahlt, und wobei die oder jede elektromagnetische Strahlungsquelle (38) im Inneren der Kammer (36) angeordnet ist.

11. Abgassystem für ein Fahrzeug, das durch ein Antriebssystem, wie einem Verbrennungsmotor, angetrieben wird, wobei das Abgassystem einen Reaktor (30) gemäß einem beliebigen vorstehenden Anspruch einschließt.

12. Abgassystem für einen Dieselmotor gemäß Anspruch 11, wobei das Abgassystem einschließt einen Katalysator zur Oxidation von NO zu NO₂, stromabwärts einen Partikelfilter zum Einfangen von Partikeln, wobei die Partikel in NO₂ in dem Abgas bei bis zu 400°C verbrennten, und der Reaktor (30) stromabwärts von dem Partikelfilter angeordnet ist.

13. Abgassystem gemäß Anspruch 11 oder 12, das ferner umfasst eine elektronische Steuerungseinheit zur Steuerung der Funktion des Abgassystems.

14. Verfahren zur photokatalytischen Reduktion von NOx in einem strömenden Gas, wobei das Verfahren umfasst ein Verringern der linearen Strömungsgeschwindigkeit von dem Gas in einer beliebigen Dimension oder Abmessung durch Durchleiten des Abgases durch einen Monolith (10), wobei der Monolith mindestens einen eine Wand aufweisenden Körper umfasst, der einen Durchlass (20) definiert, wobei der mindestens eine eine Wand aufweisende Körper mindestens einen zweiten Einlass (13) und mindestens einen zweiten Auslass (14) umfasst, wobei die Summe der Querschnittsflächen von dem oder jedem zweiten Auslass (14) größer ist als die Summe der Querschnittsflächen von dem oder jedem Einlass (13), ein Kontaktieren eines Photokatalysators mit elektromagnetischer Strahlung und ein Kontaktieren des Gases, das den mindestens einen zweiten Auslass verlässt mit dem Photokatalysator.

15. Verwendung von einem Reaktor (30) gemäß einem beliebigen der Ansprüche 1 bis 10 zur photokatalytischen Katalyse der Oxidation von Kohlenwasserstoff und/oder Kohlenmonoxid unter Verwendung von NOx und/oder Sauerstoff (O₂) in einem Abgas von einem Antriebssystem, wie einem Verbrennungsmotor, wobei das NOx infolgedessen durch die Umsetzung reduziert wird.

## Revendications

1. Réacteur photocatalytique (30) pour traiter des gaz d'échappement provenant d'un groupe moteur tel qu'un moteur à combustion interne, lequel réacteur comprenant une chambre (36) pour recevoir un gaz d'échappement s'écoulant, une première admission (32) et une première sortie (34), au moins une source de rayonnement électromagnétique (38), au moins un monolithe (10) disposé dans la chambre et un photocatalyseur **caractérisé en ce que** le monolithe (10) comprend au moins un corps à paroi définissant un passage (20), lequel au moins un corps à paroi comprenant au moins une seconde admission (13) et au moins une seconde sortie (14), dans lequel la somme des superficies des sections transversales de la ou de chaque seconde sortie (14) étant supérieure à la somme des superficies des sections transversales de la ou de chaque seconde admission (13) moyennant quoi la vitesse d'écoulement linéaire d'un gaz en un point en aval de la au moins une seconde sortie (14) est inférieure à la vitesse d'écoulement linéaire du gaz entrant par la au moins une seconde admission (13).

2. Réacteur selon la revendication 1, dans lequel le ou chaque passage comprend un tube.

3. Réacteur selon la revendication 1 ou 2, dans lequel le passage comprend au moins une cloison, laquelle au moins une cloison forme une impasse dans le passage.

4. Réacteur selon la revendication 1, 2 ou 3, dans lequel l'agencement est tel que la ou chaque seconde sortie est positionnée de façon à ce qu'un gaz puisse sortir par le au moins un passage dans une direction autre que celle dans laquelle il entre par le au moins un passage.

5. Réacteur selon la revendication 1, 2, 3 ou 4, dans lequel au moins un parmi une surface interne de la chambre (36), une surface interne d'une paroi de substrat (12) et un moyen de support (18) dans le trajet d'écoulement du gaz d'échappement sortant par la au moins une seconde sortie (14) supporte un photocatalyseur.

6. Réacteur selon la revendication 5, dans lequel le moyen de support comprend au moins une projection sensiblement latérale s'étendant dans un espace sur l'extérieur de la paroi de substrat (12) par rapport au passage, laquelle au moins une projection est supportée par la paroi de substrat (12).

7. Réacteur selon la revendication 6, dans lequel le moyen de support comprend au moins une ailette, laquelle au moins une ailette s'étend dans un mouvement hélicoïdal dans le sens longitudinal par rapport au passage (20).

8. Réacteur selon l'une quelconque des revendications précédentes, dans lequel le substrat catalytique (10) est fait, au moins en partie, à partir d'un métal, de préférence de l'acier inoxydable.

9. Réacteur selon l'une quelconque des revendications précédentes, dans lequel le photocatalyseur comprend TiO₂, SnO₂, CdS, CdSe, ZnS, In₂S₃, In₂Se₃, SrTiO₃, alpha-Fe₂O₃, SiO₂/Al₂O₃, ZnO, CdTe, CuInSe₂, CuS, FeS₂, CuFeS₂, Si, GaAS, GaSb, GaPS, GaInP, As₂S₃, AlP, AlAg, GaP, AlSb, InP, InAS, InSb, MoS₂, WTe₂, Cr₂Te₃, MoTe, Cu₂S, WS₂, Bi₂O₃, CuO, Cu₂O, MoO₃, InO₃, Ag₂O, PbO, SrTiO₃, BaTiO₃, Co₃O₄, Fe₂O₃, NiO, des pyrites naturelles ou synthétiques, des chalcopyrites naturelles ou synthétiques ou des mélanges de deux ou plusieurs quelconques parmi ceux-ci, de préférence la forme anatase du TiO₂, comprenant en outre facultativement un ou plusieurs métaux précieux dispersés sur celui-ci, de préférence choisis dans le groupe constitué par Pt, Pd, Rh, Ag, Au ou un mélange de deux ou plusieurs quelconques parmi ceux-ci ; et un ou plusieurs dopants de métal de transition, de préférence choisis dans le groupe constitué par Cr(III), Fe(III), V(IV), Ti(III), Sb(V), Ga(III) et Ag(I) ou un mélange de deux ou plusieurs quelconques de ceux-ci.

10. Réacteur selon l'une quelconque des revendications précédentes, dans lequel la ou chaque source (38) du rayonnement électromagnétique émet un rayonnement électromagnétique ultraviolet, à large bande visible ou infrarouge, et dans lequel la ou chaque source de rayonnement électromagnétique (38) est disposée à l'intérieur de la chambre (36).

11. Système d'échappement pour un véhicule alimenté par un groupe moteur tel qu'un moteur à combustion interne, lequel système d'échappement comprenant un réacteur (30) selon l'une quelconque des revendications précédentes.

12. Système d'échappement pour un moteur diesel selon la revendication 11, lequel système d'échappement comprenant un catalyseur pour oxyder NO en NO₂, un filtre à particules en aval pour piéger la matière particulaire, dans lequel la matière particulaire brûle en NO₂ dans le gaz d'échappement jusqu'à 400°C et le réacteur (30) est disposé en aval du filtre à particules.

13. Système d'échappement selon la revendication 11 ou 12, comprenant en outre une unité de commande électronique pour commander le fonctionnement du système d'échappement.

14. Procédé de réduction photocatalytique de NOₓ dans un gaz en écoulement, lequel procédé comprenant la réduction, dans une quelconque dimension, du débit linéaire du gaz en faisant passer le gaz d'échappement à travers un monolithe (10), le monolithe comprenant au moins un corps à paroi définissant un passage (20), lequel au moins un corps à paroi comprenant au moins une seconde admission (13) et au moins une seconde sortie (14), dans lequel la somme des superficies des sections transversales de la ou de chaque seconde sortie (14) étant supérieure à la somme des superficies des sections transversales de la ou de chaque admission (13), mettant en contact un photocatalyseur avec un rayonnement électromagnétique et mettant en contact le gaz sortant par la au moins une seconde sortie avec le photocatalyseur.

15. Utilisation d'un réacteur (30) selon l'une quelconque des revendications 1 à 10, pour catalyser photocatalytiquement l'oxydation d'un hydrocarbure et/ou d'un monoxyde de carbone en utilisant NOₓ et/ou de l'oxygène (O₂) dans un gaz d'échappement d'un groupe moteur tel qu'un moteur à combustion interne, lequel NOₓ est en conséquence réduit par la réaction.
